# EUROPEAN PATENT SPECIFICATION

(11) **EP 2 965 518 B1**
(45) Date of publication and mention of the grant of the patent: **27.03.2019**
(21) Application number: 14722933.0
(22) Date of filing: 08.04.2014
(51) Int. Cl.: H04N 19/176, H04N 19/172, H04N 19/17, H04N 19/156, H04N 19/103

(54) **RESOURCE FOR ENCODING A VIDEO SIGNAL**
RESSOURCE ZUR CODIERUNG EINES VIDEOSIGNALS
RESSOURCE POUR CODER UN SIGNAL VIDÉO

(30) Priority: 10.04.2013 GB 201306480; 20.06.2013 US 201313922948
(43) Date of publication of application: 13.01.2016
(73) Proprietor: Microsoft Technology Licensing, LLC, Redmond, WA 98052 (US)
(72) Inventor: HEMMENDORFF, Magnus, Redmond, Washington 98052-6399 (US); ZHAO, David, Redmond, Washington 98052-6399 (US); SABLIN, Sergey, Redmond, Washington 98052-6399 (US); CARLSSON, Pontus, Redmond, Washington 98052-6399 (US); HOFBAUER, Konrad, Redmond, Washington 98052-6399 (US); NIKIFOROV, Sergei, Redmond, Washington 98052-6399 (US)
(74) Representative: Driver, Virginia Rozanne
(86) International application number: PCT/US2014/033240
(87) International publication number: WO 2014/168897

(56) References cited:
- WO-A1-02/058401
- WO-A1-2004/023821
- US-A- 5 847 761
- US-A- 5 986 712
- US-A1- 2006 050 789
- US-A1- 2013 058 232

## Description

### BACKGROUND

In modern communications systems a video signal may be sent from one terminal to another over a medium such as a wired and/or wireless network, often a packet-based network such as the Internet. Typically the frames of the video are encoded by an encoder at the transmitting terminal in order to compress them for transmission over the network. The encoding for a given frame may comprise intra frame encoding whereby blocks are encoded relative to other blocks in the same frame. In this case a target block is encoded in terms of a difference (the residual) between that block and a neighbouring block. Alternatively the encoding for some frames may comprise inter frame encoding whereby blocks in the target frame are encoded relative to corresponding portions in a preceding frame, typically based on motion prediction. In this case a target block is encoded in terms of a motion vector identifying an offset between the block and the corresponding portion from which it is to be predicted, and a difference (the residual) between the block and the corresponding portion from which it is predicted. A corresponding decoder at the receiver decodes the frames of the received video signal based on the appropriate type of prediction, in order to decompress them for output to a screen.

Some video signals may include frames that are particularly large, i.e. that include a large number of bytes after encoding. An example is a video for a screen sharing stream, which often have high resolution and small text that must be readable after compression. Large frames can cause issues. For example, there may be a long delay before a large frame is visible on a screen at the receiver. This delay may cause users to question whether the video link is actually operational. Long frames may also be associated with lengthy robustness and error recovery processing. This is because a single burst of packet loss can cause an entire frame to be lost. The probability of loss increases with frame length. Recovery time also increases with frame length. Transmitting too many packets is also undesirable. If the number of packets is too large, this can cause issues for transmitter and receiver buffers, e.g. for hardware decoders. A large number of packets can also take a long time to decode.

The following documents disclose video coding techniques whereby encoding resources are monitored during normal encoding operation and, responsive to a determination that the amount of resources required for encoding will exceed a given limit, switch to a less resource intensive coding mode:
US 5 986 712 A (PETERSON RICHARD MATEER [US] ET AL) 16 November 1999 (1999-11-16);
WO 02/058401 A1 (ST MICROELECTRONICS ASIA [SG]; GOH KWONG HUANG [SG]; LUCAS HUI Y W [SG) 25 July 2002 (2002-07-25);
US 5 847 761 A (UZ K METIN [US] ET AL) 8 December 1998 (1998-12-08);
US 2006/050789 A1 (GISQUET CHRISTOPHE [FR] ET AL) 9 March 2006 (2006-03-09).

### SUMMARY

According to one aspect, the disclosure herein relates to an apparatus for encoding video data. The video data may be the slices, blocks or macroblocks of any suitable codec, or any desired division of a frame. The apparatus has a compliance module for comparing a resource requirement associated with encoding the video data to form at least part of an encoded frame using a standard encoding mode with an acceptable resource level. The acceptable resource level may, for example, be associated with an acceptable frame length, encoding time or CPU usage.

The apparatus may also comprise an encoder. If the compliance module determines that encoding all of the video data using the standard encoding mode will exceed the acceptable resource level, the encoder encodes only some of that data using the standard encoding mode in response. The encoder may then fill the remainder of the at least part of the encoded frame with data that is associated with lower resource usage than data generated using the standard encoding mode.

The invention is defined in the appended claims. Any examples and embodiments of the description not falling within the scope of the claims do not form part of the invention and are provided for illustrative purposes only.

### BRIEF DESCRIPTION OF THE DRAWINGS

For a better understanding of the described embodiments and to show how they may be put into effect, reference is made by way of example to the accompanying drawings in which:
Figure 1 is a schematic representation of a video stream,
Figure 2 is a schematic block diagram of a communication system,
Figure 3 is a schematic representation of an encoded video stream,
Figure 4 is a schematic block diagram of an encoder,
Figure 5 is a schematic block diagram of a decoder,
Figure 6 is a schematic representation of an encoding method,
Figure 7 is a schematic representation of an encoding method, and
Figure 8 is a schematic representation of a frame.

### DETAILED DESCRIPTION

It may be beneficial to monitor resources consumed by encoding video data. The video data may represent a frame in a video sequence or part of a frame. The monitoring may be performed before the frame is encoded or during the encoding process. The resources required to encode particular video data may be identified as problematic. This may cause the encoder to stop encoding video data using a standard encoding mode before all of the data has been encoded. The encoder may fill the remaining part of the frame that was intended to be filled with the encoded video data with data that is less resource intensive to generate. That data may be generated using a restrained encoding mode associated with lower resource usage. The remaining part of the encoded frame may be filled with cheap data. The encoded frame that results will be compliant with the acceptable resource level.

Cheap data may be generated independently of the video data. For example, cheap data may be an instruction to the receiving device that does not rely on the video data. The instruction could be, for example, to replicate part of a preceding frame or fill a block of pixels with uniform colour. Consequently some of the video data may not be encoded at all. Therefore, if the video data represents an image, only part of that image may actually be encoded in the encoded frame. Subsequent frames may correct this deficiency so that a progressively updating image is seen at the receiver.

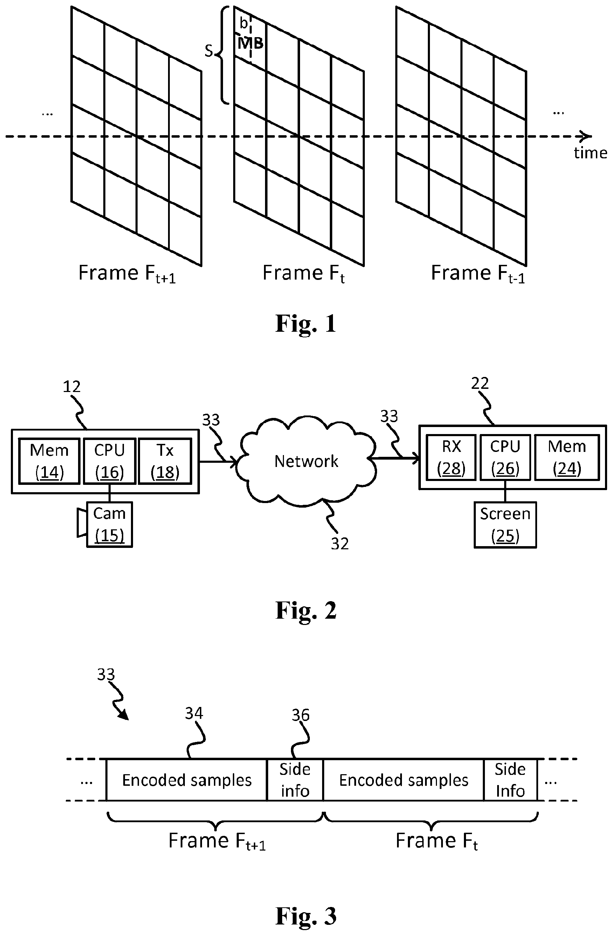

Figure 1 gives a schematic illustration of an input video signal captured from a camera, and divided into portions ready to be encoded by a video encoder so as to generate an encoded bitstream. The signal comprises a moving video image divided in time into a plurality of frames (F), each frame representing the image at a different respective moment in time (...t-1, t, t+1...). Within each frame, the frame is divided in space into a plurality of portions each representing a plurality of pixels. The portions may for example be referred to as blocks. In certain schemes, the frame is divided and sub-divided into different levels of portion or block. For example each frame may be divided into macroblocks (MB) and each macroblock may be divided into blocks (b), e.g. each block representing a region of 8x8 pixels within a frame and each macroblock representing a region of 2x2 blocks (16x16 pixels). In certain schemes each frame can also be divided into slices (S), each comprising a plurality of macroblocks.

A block in the input signal may initially be represented in the spatial domain, where each channel is represented as a function of spatial position within the block, e.g. each of the luminance (Y) and chrominance (U,V) channels being a function of Cartesian coordinates x and y, Y(x,y), U(x,y) and V(x,y). In this representation, each block or portion is represented by a set of pixel values at different spatial coordinates, e.g. x and y coordinates, so that each channel of the colour space is represented in terms of a particular value at a particular location within the block, another value at another location within the block, and so forth.

The block may however be transformed into a transform domain representation as part of the encoding process, typically a spatial frequency domain representation (sometimes just referred to as the frequency domain). In the frequency domain the block is represented in terms of a system of frequency components representing the variation in each colour space channel across the block, e.g. the variation in each of the luminance Y and the two chrominances U and V across the block. Mathematically speaking, in the frequency domain each of the channels (each of the luminance and two chrominance channels or such like) is represented as a function of spatial frequency, having the dimension of 1/length in a given direction. For example this could be denoted by wavenumbers kₓ and k_{y} in the horizontal and vertical directions respectively, so that the channels may be expressed as Y(kₓ, k_{y}), U(kₓ, k_{y}) and V(kₓ, k_{y}) respectively. The block is therefore transformed to a set of coefficients which may be considered to represent the amplitudes of different spatial frequency terms which make up the block. Possibilities for such transforms include the Discrete Cosine transform (DCT), Karhunen-Loeve Transform (KLT), or others.

An example communication system in which the present embodiments may be employed is illustrated schematically in the block diagram of Figure 2. The communication system comprises a first, transmitting terminal 12 and a second, receiving terminal 22. For example, each terminal 12, 22 may comprise one of a mobile phone or smart phone, tablet, laptop computer, desktop computer, or other household appliance such as a television set, set-top box, stereo system, etc. The first and second terminals 12, 22 are each operatively coupled to a communication network 32 and the first, transmitting terminal 12 is thereby arranged to transmit signals which will be received by the second, receiving terminal 22. Of course the transmitting terminal 12 may also be capable of receiving signals from the receiving terminal 22 and vice versa, but for the purpose of discussion the transmission is described herein from the perspective of the first terminal 12 and the reception is described from the perspective of the second terminal 22. The communication network 32 may comprise for example a packet-based network such as a wide area internet and/or local area network, and/or a mobile cellular network.

The first terminal 12 comprises a computer-readable storage medium 14 such as a flash memory or other electronic memory, a magnetic storage device, and/or an optical storage device. The first terminal 12 also comprises a processing apparatus 16 in the form of a processor or CPU having one or more execution units; a transceiver such as a wired or wireless modem having at least a transmitter 18; and a video camera 15 which may or may not be housed within the same casing as the rest of the terminal 12. The storage medium 14, video camera 15 and transmitter 18 are each operatively coupled to the processing apparatus 16, and the transmitter 18 is operatively coupled to the network 32 via a wired or wireless link. Similarly, the second terminal 22 comprises a computer-readable storage medium 24 such as an electronic, magnetic, and/or an optical storage device; and a processing apparatus 26 in the form of a CPU having one or more execution units. The second terminal comprises a transceiver such as a wired or wireless modem having at least a receiver 28; and a screen 25 which may or may not be housed within the same casing as the rest of the terminal 22. The storage medium 24, screen 25 and receiver 28 of the second terminal are each operatively coupled to the respective processing apparatus 26, and the receiver 28 is operatively coupled to the network 32 via a wired or wireless link.

The storage 14 on the first terminal 12 stores at least a video encoder arranged to be executed on the processing apparatus 16. When executed the encoder receives a "raw" (unencoded) input video stream from the video camera 15, encodes the video stream so as to compress it into a lower bitrate stream, and outputs the encoded video stream for transmission via the transmitter 18 and communication network 32 to the receiver 28 of the second terminal 22. The storage 24 on the second terminal 22 stores at least a video decoder arranged to be executed on its own processing apparatus 26. When executed the decoder receives the encoded video stream from the receiver 28 and decodes it for output to the screen 25. A generic term that may be used to refer to an encoder and/or decoder is a codec.

Figure 3 gives a schematic representation of an encoded bitstream 33 as would be transmitted from the encoder running on the transmitting terminal 12 to the decoder running on the receiving terminal 22. The bitstream 33 comprises a plurality of encoded samples 34 for each frame, including any motion vectors. In one application, the bitstream may be transmitted as part of a live (real-time) video phone call such as a VoIP (Voice-over-Internet Protocol) call between the transmitting and receiving terminals 12, 22 (VoIP calls can also include video).

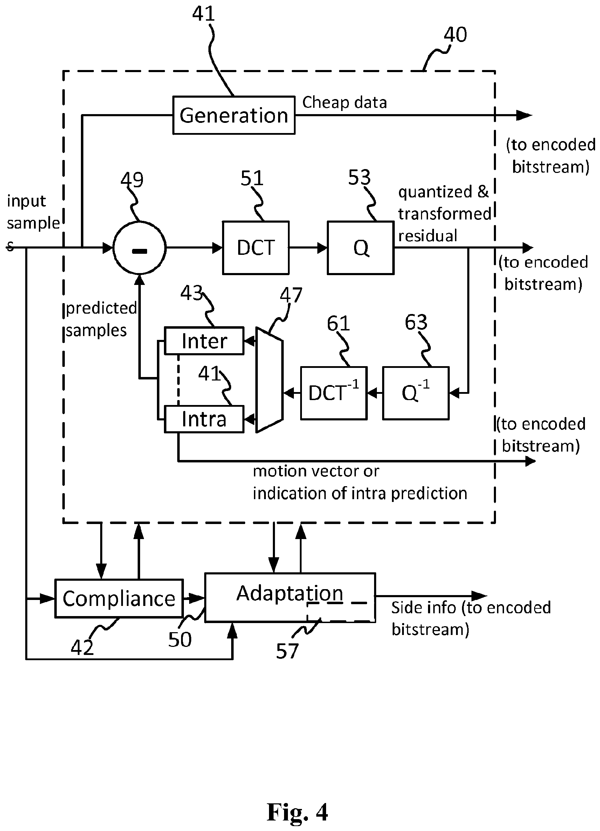

Figure 4 is a high-level block diagram schematically illustrating an encoder such as might be implemented on transmitting terminal 12. The encoder comprises: a discrete cosine transform (DCT) module 51, a quantizer 53, an inverse transform module 61, an inverse quantizer 63, an intra prediction module 41, an inter prediction module 43, a switch 47, and a subtraction stage (-) 49. The encoder also comprises a generation module 41, a compliance module 42 and an adaptation module 50, including a spatial selectivity sub-module 57. Each of these modules or stages may be implemented as a portion of code stored on the transmitting terminal's storage medium 14 and arranged for execution on its processing apparatus 16, though the possibility of some or all of these being wholly or partially implemented in dedicated hardware circuitry is not excluded.

The subtraction stage 49 is arranged to receive an instance of the input video signal comprising a plurality of blocks (b) over a plurality of frames (F). The input video stream is received from a camera 15 coupled to the input of the subtraction stage 49. The intra or inter prediction 41, 43 generates a predicted version of a current (target) block to be encoded based on a prediction from another, already-encoded block or other such portion. The predicted version is supplied to an input of the subtraction stage 49, where it is subtracted from the input signal (i.e. the actual signal) to produce a residual signal representing a difference between the predicted version of the block and the corresponding block in the actual input signal.

In intra prediction mode, the intra prediction 41 module generates a predicted version of the current (target) block to be encoded based on a prediction from another, already-encoded block in the same frame, typically a neighbouring block. When performing intra frame encoding, the idea is to only encode and transmit a measure of how a portion of image data within a frame differs from another portion within that same frame. That portion can then be predicted at the decoder (given some absolute data to begin with), and so it is only necessary to transmit the difference between the prediction and the actual data rather than the actual data itself. The difference signal is typically smaller in magnitude, so takes fewer bits to encode.

In inter prediction mode, the inter prediction module 43 generates a predicted version of the current (target) block to be encoded based on a prediction from another, already-encoded region in a different frame than the current block, offset by a motion vector predicted by the inter prediction module 43 (inter prediction may also be referred to as motion prediction). In this case, the inter prediction module 43 is switched into the feedback path by switch 47, in place of the intra frame prediction stage 41, and so a feedback loop is thus created between blocks of one frame and another in order to encode the inter frame relative to those of a preceding frame. This typically takes even fewer bits to encode than intra frame encoding.

The samples of the residual signal (comprising the residual blocks after the predictions are subtracted from the input signal) are output from the subtraction stage 49 through the transform (DCT) module 51 (or other suitable transformation) where their residual values are converted into the frequency domain, then to the quantizer 53 where the transformed values are converted to discrete quantization indices. The quantized, transformed indices of the residual as generated by the transform and quantization modules 51, 53, as well as an indication of the prediction used in the prediction modules 41,43 and any motion vectors generated by the inter prediction module 43, are all output for inclusion in the encoded video stream 33 (see element 34 in Figure 3); typically via a further, lossless encoding stage such as an entropy encoder (not shown) where the prediction values and transformed, quantized indices may be further compressed using lossless encoding techniques known in the art.

An instance of the quantized, transformed signal is also fed back though the inverse quantizer 63 and inverse transform module 61 to generate a predicted version of the block (as would be seen at the decoder) for use by the selected prediction module 41 or 43 in predicting a subsequent block to be encoded. Similarly, the current target block being encoded is predicted based on an inverse quantized and inverse transformed version of a previously encoded block. The switch 47 is arranged pass the output of the inverse quantizer 63 to the input of either the intra prediction module 41 or inter prediction module 43 as appropriate to the encoding used for the frame or block currently being encoded.

Thus in embodiments the encoder has at least two possible encoding modes: intra prediction and inter prediction. Different encoding modes may also be associated with different frequency basis functions. Further possible encoding modes may include different modes based on different levels of partitioning of macroblocks, e.g. selecting between a higher complexity mode in which a separate prediction is performed for each 4x4 block within a macroblock or a lower complexity mode in which prediction is performed based on only 8x8 or 8x16 blocks or even whole macroblocks. The available modes may also include different options for performing prediction. For example, in one intra mode the pixels of a 4x4 block (b) may be determined by extrapolating down from the neighbouring pixels from the block immediately above, or by extrapolating sideways from the block immediately to the left. Another prediction mode called "skip mode" may also be provided in some codecs, which may be considered as an alternative type of inter mode. In skip mode the target's motion vector is inferred based on the motion vectors to the top and to the left and there is no encoding of residual coefficients. The manner in which the motion vector is inferred is consistent with motion vector prediction, and thus the motion vector difference is zero so it is only required to signal that the MB is a skip block. In addition, the residual pixel is skipped, so that the macroblock in the currently encoded frame is a copy of a macroblock in the preceding frame. Other encoding modes may provide for the image to be encoded at different quality levels via the size of the quantising steps applied by quantizer 53. Several prediction modes are described in documents defining standards such as H264 and HEVC.

Any of the above-described encoding modes could be used as a standard encoding mode for encoding video data. More generally, any encoding mode that an encoder might select to encode video data could be considered a standard encoding mode.

The compliance module 42 monitors the resource usage associated with encoding video data. The video data may be a frame or part of a frame. The video data could represent a particular block of pixels. For example, the video data could be a slice. Every frame, or part of a frame, may be associated with a particular defined budget (described below). Associating parts of a frame with a defined budget may be appropriate when the encoder encodes sections of the frame in parallel. The encoder may divide a frame into a plurality of sections to be encoded in parallel. Each section may be associated with its own defined budget. The encoder and compliance module may operate to combine the resource-conserving encoding methods described herein with parallel encoding by monitoring the encoding of each section against its associated budget (as described below).

The description below makes reference to encoding "frames". However, this is for ease of reference only and it should be understood that the video data to be encoded may also form only part of a frame. Similarly, the description below makes reference to filling the remainder an encoded frame with less resource-intensive data. It should be understood that the less-resource intensive data might also be used to fill only part of the encoded frame. The part of the encoded frame may be that which would have been filled with an encoded version of the video data comprised in the frame section.

The resources monitored by the compliance module may include, for example: frame length, bit rate, CPU usage and time that has elapsed since encoding started. The compliance module may also assess the likely resources required by frames that are yet to enter the encoder so that potentially resource-intensive frames can be identified in advance. The compliance module may compare the measured resource usage or predicted resource usage against a defined budget. For example, the budget may define a maximum frame length in bytes or a maximum number of CPU cycles, or a deadline in time for encoding a frame. If the compliance module senses that the current frame is going to reach the limit or close to the limit it may invoke a panic mode that causes the encoder to stop encoding the frame. This may be judged by comparing current resource usage with an acceptable resource level, which may be the same as or lower than the defined budget. The rest of the frame may be filled with less resource-intensive content so that the resource budget is not exceeded. The encoder may generate cheap content by switching to a different encoding mode for the remainder of the frame. In some instances the less resource-intensive content may be generated by generation module 41, in other instances by the encoder modules described above. Suitably this restrained encoding mode is associated with lower resource usage than the encoding mode that the encoder was using to encode the frame before panic mode was invoked. If the compliance module identifies a resource-intensive frame in advance, it may instruct the encoder accordingly so that appropriate encoding modes are selected for different parts of the frame to meet the resource budget.

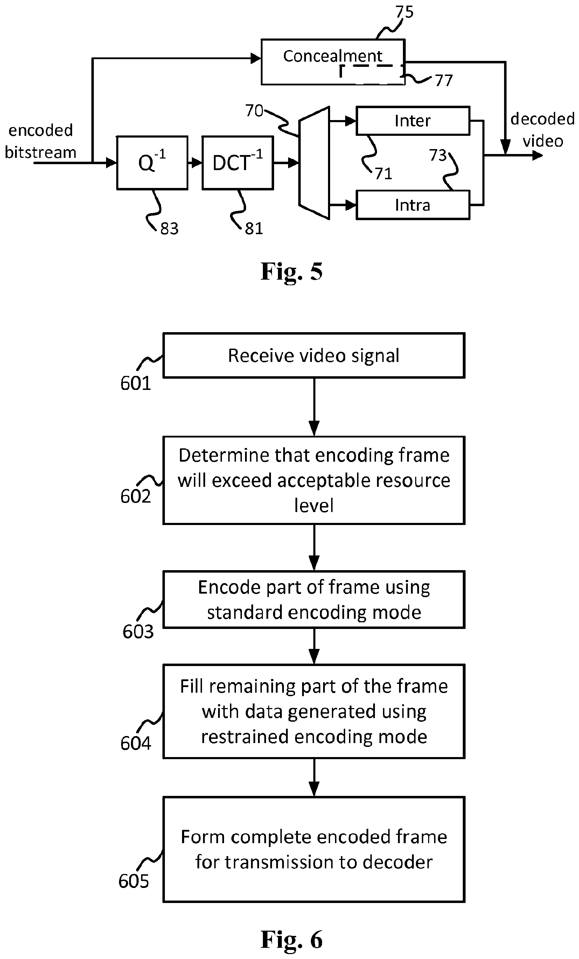

The compliance module and encoder may interact with adaptation module 50. The adaptation module 50 may be configured to apply a loss adaptive rate-distortion optimisation (LARDO) process to select an optimal encoding mode for encoding each macroblock according to an optimisation criterion. The optimisation criterion may aim to balance a robust/better quality encoding mode with resource constraints in a trade-off between distortion and bit rate. The adaptation module receives input from the compliance module on anticipated resource requirements which it may take into account in selecting encoding modes. The adaptation module 50 may also have an instance of the concealment module 75 substantially similar to that at the decoder (see Figure 5), so it can see the effect of potential loss and concealment of that loss as might be seen at the decoder.

Turning to the spatial selectivity sub-module 57 provided at the encoder side, in accordance with embodiments disclosed herein this is configured to apply a spatial selectivity to the LARDO process or other such rate-distortion trade-off performed by the adaptation module 50.

The spatial selectivity sub-module 57 may be configured to identify a region of interest (ROI) in the video being encoded for transmission. For example, this may be done by applying a facial recognition algorithm, examples of which in themselves are known in the art. The facial recognition algorithm recognises a face in the video image to be encoded, and based on this identifies the region of the image comprising the face or at least some of the face (e.g. facial features like mouth, eyes and eyebrows) as the region of interest. The facial recognition algorithm may be configured specifically to recognise a human face, or may recognise faces of one or more other creatures. In other embodiments a region of interest may be identified on another basis than facial recognition. Other alternatives include other types of image recognition algorithm such as a motion recognition algorithm to identify a moving object as the region of interest, or a user-defined region of interest specified by a user of the transmitting terminal 12.

In further embodiments, the spatial selectivity sub-module 57 may be configured not just to identify a single levelled region of interest, but to determine a perceptual sensitivity map whereby several different regions are allocated several different levels of perceptual significance. For instance this may be done on a macroblock-by-macroblock basis, whereby each macroblock is mapped to a respective level of perceptual significance selected from a scale. The map may be determined by a facial recognition algorithm, e.g. configured to assign a highest level of perceptual significance to main facial features (e.g. eyes, eyebrows, mouth); a next highest level to peripheral facial features (e.g. cheeks, nose, ears); a next lowest level to remaining areas of the head and shoulders or other bodily features, and a lowest level to background areas (e.g. stationary scenery). Other alternatives include other types of image recognition algorithm such as a motion recognition algorithm to allocate levels of perceptual significance in dependence on an amount of motion or change, or user-defined maps specified by a user of the transmitting terminal 12 (e.g. the user specifies a centre of interest and the levels decrease spatially outwards in a pattern from that centre).

In embodiments, the spatial selectivity sub-module 57 may be configured to output an indication of the region of interest or perceptual importance map, which is transmitted to the decoder at the receiving terminal 22, e.g. in side info 36 embedded in the encoded bitstream 33, or in a separate stream or signal. See again Figure 3. This is not needed by the decoder to decode the video, as the encoding mode for each macroblock will be encoded into the encoded bitstream with the encoded samples 34 anyway. However, in certain embodiments it may be included to aid the decoder in determining whether to apply concealment.

Figure 5 is a high-level block diagram schematically illustrating a decoder such as might be implemented on receiving terminal 22. The decoder comprises an inverse quantization stage 83, an inverse DCT transform stage 81, a switch 70, and an intra prediction stage 71 and a motion compensation stage 73. The decoder also comprises a concealment module 75, which in some embodiments may comprise a spatial selectivity sub-module 77. Each of these modules or stages may be implemented as a portion of code stored on the receiving terminal's storage medium 24 and arranged for execution on its processing apparatus 26, though the possibility of some or all of these being wholly or partially implemented in dedicated hardware circuitry is not excluded.

The inverse quantizer 81 is arranged to receive the encoded signal 33 from the encoder, via the receiver 28. The inverse quantizer 81 converts the quantization indices in the encoded signal into de-quantized samples of the residual signal (comprising the residual blocks) and passes the de-quantized samples to the reverse DCT module 81 where they are transformed back from the frequency domain to the spatial domain.

The switch 70 then passes the de-quantized, spatial domain residual samples to the intra or inter prediction module 71 or 73 as appropriate to the prediction mode used for the current frame or block being decoded, and the intra or inter prediction module 71, 73 uses intra or inter prediction respectively to decode the blocks of each macroblock. Which mode to use is determined using the indication of the prediction and/or any motion vectors received with the encoded samples 34 in the encoded bitstream 33. If a plurality of different types of intra or inter coding modes are present in the bitstream and if these require different decoding, e.g. different modes based on different partitioning of macroblocks, or a skip mode, then this is also indicated to the relevant one of the intra or inter decoding module 71, 73 along with the samples 34 in the encoded bitstream 33, and the relevant module 71, 73 will decode the macroblocks according to each respective mode.

The output of the DCT module 51 (or other suitable transformation) is a transformed residual signal comprising a plurality of transformed blocks for each frame. The decoded blocks are output to the screen 25 at the receiving terminal 22.

Further, the concealment module 75 is coupled to so as to have visibility of the incoming bitstream 33 from the receiver 28. In event that a frame or part of a frame is lost (e.g. due to packet loss or corruption of data), the concealment module 75 detects this and selects whether to apply a concealment algorithm. If the concealment algorithm is applied, this works either by projecting a replacement for lost patches of a frame (or even a whole lost frame) from a preceding, received frame; or projects a replacement for a lost patches of a frame from one or more other, received parts of the same frame. That is, either by extrapolating a replacement for a lost frame or lost part of a frame from a preceding, received frame; or extrapolating a replacement for a lost part of a frame from another, received part of the same frame; or estimating a replacement for a lost part of a frame by interpolating between received parts of the same frame. Details of concealment algorithms in themselves are known in the art.

The spatial selectivity sub-module 77 may be configured to adapt the decision as to whether to apply concealment. To do this, it identifies a region of interest in the incoming video image. In embodiments, this may be achieved using the region of interest or perceptual sensitivity map signalled in the side info 36 received from the transmitting terminal 12, e.g. extracting it from the incoming bitstream 33. In the case of a perceptual sensitivity map having several different levels of significance, the region of interest may be determined at the decoder side by taking those macroblocks having greater than a certain level as the region of interest. Alternatively the region of interest may be signalled explicitly. In other alternative embodiments, and any of the techniques described above for identifying a region of interest may be applied independently at the decoder side at the receiving terminal 22. For example the facial recognition algorithm or other image recognition algorithm may be applied in the spatial selectivity sub-module 77 of the decoder at the receiving terminal 22, or a user-defined region of interest may be specified by a user of the receiving terminal 22. In the case of an image recognition algorithm such as a facial recognition algorithm applied at the decoder side, in event of loss this may be based on a previously received, successfully decoded frame, on the assumption that in most cases the region of interest is unlikely to have moved significantly from one frame to the next.

By whatever means the region of interest is identified at the decoder side, the sub-module 77 is configured to determine an estimate of concealment quality that is selectively directed toward the region of interest within the frame. That is, the estimate is directed to a particular region smaller than the frame - either in that the estimate is only based on the region of interest, or in that the estimate is at least biased towards that region. Based on such an estimate, the concealment module determines whether or not to apply the concealment algorithm. If the quality estimate is good enough, concealment is applied. Otherwise the receiving terminal just freezes the last successfully received and decoded frame.

In a communication scenario, the face is often of greatest importance, relative to the background or other objects. In determining whether to display a concealed frame or not, if the concealment quality estimation just estimates the quality of the full frame without taking content into account, then this can result in a concealed frame being displayed even though the face area contains major artefacts. Conversely, a potential concealed frame may be discarded even though the face has good quality while only the background contains artefacts. Hence there is a potential problem in that concealed frames which could be beneficial to display are sometimes not displayed, while concealed frames that are not beneficial to display sometimes do end up being displayed.

In embodiments, the region of interest is used to inform a yes/no decision about concealment that applies for the whole frame. The quality estimation is targeted in a prejudicial fashion on the region of interest to decide whether to apply concealment or not, but once that decision has been made it is applied for the whole frame, potentially including other regions such as the background. That is, while concealment may always be applied locally, to repair lost patches, in embodiments it is determined how much can be patched locally before the entire frame should be discarded. I.e. while only those individual patches where data is lost are concealed, the decision about concealment is applied once per frame on a frame-by-frame basis. In one such embodiment, the concealed version of the image is displayed if the face regions are good enough. If the face region is degraded too much using concealment, it may be better to instead discard the entire frame.

The concealment quality provides an estimate of the quality of a concealed version of the lost portion(s) if concealed using the concealment algorithm.

A schematic block diagram of one encoding method is shown in Figure 6. According to this method, the video signal is received (step 601) and it is determined whether encoding a particular frame in that signal will exceed an acceptable resource level (step 602). Part of the frame is then encoded using a standard encoding mode (step 603) and the remaining part of the frame is filled with data associated with a lower level of resource usage (step 604). This results in the formation of a completed frame for transmission to a decoder (step 605).

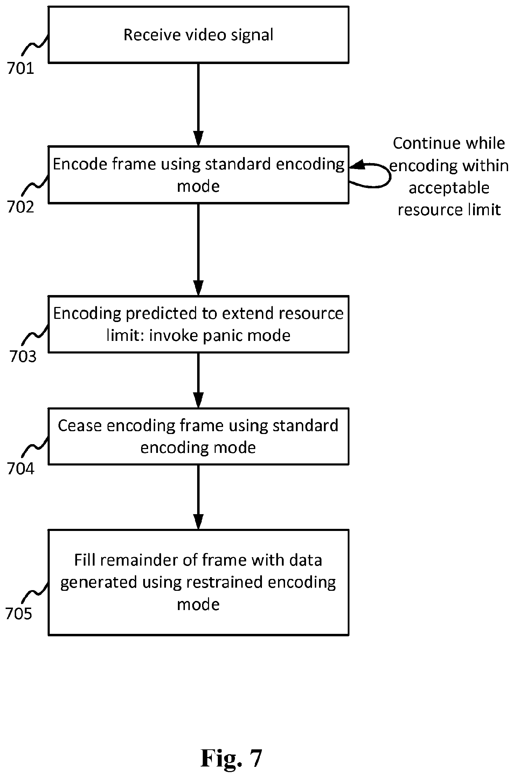

A schematic block diagram of another encoding method is shown in Figure 7. According to this method, the video signal is received (step 701) and encoded using a standard encoding mode (step 702). The encoding is allowed to proceed as long as a resource requirement of the encoding stays within acceptable bounds. If it appears as though encoding the frame will exceed the resource limit, panic mode is invoked (step 702). Possible triggers for panic mode may be that the send buffer is full or the encoder has run out of allocated CPU time. Invoking panic mode causes encoding using the standard encoding mode to cease (step 704) and the remainder of the frame to be filled with data associated with a lower level of resource usage (step 705).

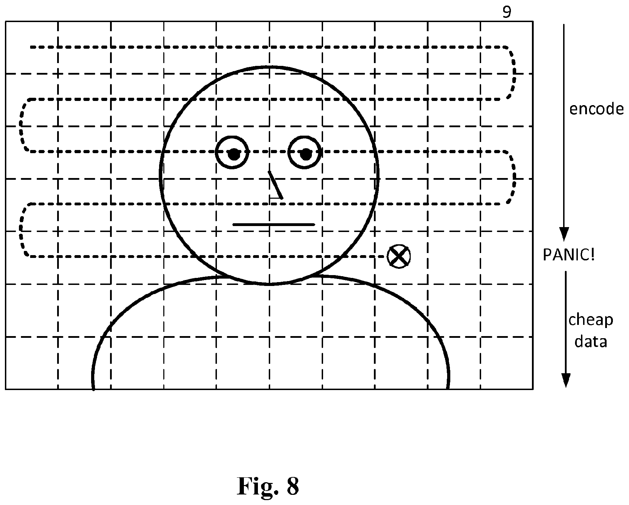

A simple example of a frame for encoding is shown in Figure 8. In this example the encoder encodes the blocks of the frame from the top down until panic mode is invoked. An aim of one or more embodiments may be to fill the remaining parts of the frame with less resource-intensive content. In general, this content may be generated by a restrained encoding mode, which suitably uses fewer resources than the standard encoding mode. The restrained encoding mode will typically be one that generates fewer bits or that requires fewer CPU cycles than the standard encoding mode. The restrained encoding mode might also be associated with a lower frequency basis function than the standard encoding mode. A lower frequency basis function is typically characterised by a lower spatial frequency, i.e. it encodes a frame at a lower resolution compared with a higher frequency basis function.

The restrained encoding mode may operate directly on the remaining data in the frame. I.e. the restrained encoding mode may encode the remaining data in a similar fashion to the standard encoding mode but just in a way that uses fewer resources. Another option would be to terminate the encoding altogether, and just send what the encoder has already generated. This is not acceptable to most video encoding standards, however, which expect the encoded frame to be filled with something. Another option is for the restrained encoding mode to generate data independently of the remainder of the frame. For example, rather than operating on the frame data, the restrained encoding mode could stuff the frame with "cheap data" provided for by the standard. Such data could be provided by generation module 41. The cheap data could, for example, indicate that a remaining part of the frame is a repetition of a previous frame or a repetition of an earlier part of the current frame. The cheap data could indicate that a remaining part of the frame should just be filled with a block of uniform colour. Examples from the H264 standard, which may be repeated to preserve bits after the residual, include:
- SKIP : keep the macroblock from the previous frame
- SKIP_RESIDUAL: predict from macroblock in previous frame but with a motion vector, so effectively "copy with motion vector"
- UNICOLOR
- Copy row above

Any motion vector may be based on a motion vector derived by the standard encoding algorithm, i.e. from before panic mode.

Filling the remainder of the frame with cheap data may be particularly resource efficient since it puts an end to encoding operations on data in the current frame. Nonetheless, filling the rest of the frame with cheap data will consume some bytes, which needs to be taken into account if the resource budget is to be preserved. The compliance module suitably has a defined budget that limits the resources that can be expended on a particular frame. The compliance module may have an acceptable resource level set lower than this overall budget so that panic mode is triggered early enough for there to be enough room in the budget to fill the remainder of the frame. The compliance mode may adjust the acceptable resource level and the overall budget depending on available resources, the application, the type of images being transferred etc.

If the frame has been identified in advance as a potentially resource-intensive frame, then higher-quality, resource-intensive encoding modes can be targeted intelligently at parts of the frame having a higher perceptual significance. This may include parts of the frame representing a human or animal face. Remaining parts of the frame, such as the background, may be encoded using a lower-quality encoding mode. If the potential for breaching the acceptable resource limit is identified while the frame is actually being encoded, the options for targeting resources intelligently may be more limited. In the example shown in Figure 8 it will always tend to be the lower part of the frame that is filled with lower quality data. This could be addressed by preferentially encoding certain parts of the frame, thereby maximising the chances of those parts being encoded before panic mode is invoked. For example, face detection or receiver gaze control could be used to encode those perceptually significant parts of the frame first. A simpler option would be just to encode the middle part of the frame first. The practical applicability of this arrangement is somewhat limited at present, however, as current video standards do not typically support encoding the frame in a special order.

There are different strategies that may be employed when encoding a frame following a frame that triggered panic mode. One option is to encode as normal and hope that the frame will be encoded within the budget. Often this will be successful, since a large portion of the frame will already be like the target image. An exception may be when the target is moving and generating frequent updates in the source image. An alternative strategy that may be more appropriate for moving targets is outlined below. Another reason why the next frame may be successfully encoded is that often a controller for managing the bitrate/quality trade-off will have made an adjustment from the last frame, e.g. by changing the size of the quantization steps Qₚ. This step size usually cannot be adjusted during a frame but may be adjusted between one frame and the next. The perception of the user at the receiver-end will be of an image that progressively updates.

Most current video standards encode frames from top to bottom. There is a risk that if panic mode is invoked in consecutive frames the lower portion of the image at the receiver may be rarely updated. To address this, the compliance module may remember where it invoked panic mode in a previous frame. When encoding the next frame the compliance module may instruct the encoder to apply panic mode until it reaches the row at which panic mode was invoked in the previous frame, whereupon the encoder reverts to standard encoding. In other words, the frame is still encoded from top to bottom, but it is the top part of the frame that is filled with cheap or lower quality data while the later parts of the frame are encoded using a standard encoding mode. Another option is to just start encoding the next frame at the point where the compliance module invoked panic mode on the previous frame (assuming that it is permissible to have parts of the frame that are empty under the relevant video coding standard). Starting encoding, or standard encoding, from the point at which the compliance module panicked in the last frame has the effect of generating a rolling, progressive update at the receiver. Updates sweep repeatedly from the top to the bottom of the screen (vice versa is also possible, with updates sweeping from bottom to top). This arrangement may be particularly suitable for moving targets, which generate frequent updates in the source image.

In some scenarios the compliance module may be able to predict in advance that the next frame after a "panic mode" frame is also likely to trigger panic mode. This may be because the target is moving and generating frequent updates in the image (as described above) or it may be because the encoder is expected to use the same quality of encoding for the next frame as for the "panic mode" frame. In one example, the encoder may be configured to adapt the quality of its encoding to the type of image represented by the frames in the video signal. The adaptation module may be capable of implementing an algorithm for recognising a type of image represented by a frame and selecting an appropriate encoding mode accordingly. As an example, in a screen sharing application, the adaptation module may recognise that the frames in the video signal represent a page of text. The compliance module, which is coupled to the adaptation module, may determine that the next frame will likely encounter the same resource limitations as the preceding frame because of the nature of the image that it represents. To return to the screen sharing example, the adaptation module will wish to maintain the same quantization step Qₚ from one frame to the next so that text is sharply defined enough to be read at the receiving end. The compliance module may therefore instruct the encoder to encode only part of the frame (which may be selected dependence on a perceptual significance associated with that part of the frame, as described above) using the standard encoding mode.

The encoding methods described herein may be switched on or off by the encoder. This decision may be made in dependence on the application that is generating the video data and/or the type of data it is generating. This decision may also be made on a frame-by-frame basis, possibly in addition to decisions about quantisation step Qₚ and frame rate (which may also be made on a frame-by-frame basis. The decision about encoding mode may be made in dependence on whether the video data is sufficiently adaptable in its encoding requirements to keep within the resource budget. For example, the video data generated by some applications can be readily encoded at lower resolution. In this context "resolution" may refer to at least quantisation step Qₚ and the number of pixels. Other data might be encoded at a lower frame rate. Video data of this type may be readily encoded using a normal encoding mode that adapts Qₚ from one frame to another. Other types of data may not be so adaptable. For example, while screen sharing applications may be adaptable to sacrificing some frame rate, that is rarely acceptable to animations or normal video. Screen sharing applications do tend to generate data that should be encoded at high resolution (which could be many pixels and/or small quantization steps). This is resource intensive, but the text-based nature of much screen sharing data means that it may not be appropriate to reduce the resolution. Screen sharing applications also tend to have a target associated with relatively little movement, i.e. pages of text may move relatively infrequently. Resource-conserving encoding methods may be particularly suitable for screen sharing applications since the resolution can be preserved, at least for part of each frame, and the progressive nature of the image updates should not be too problematic.

Other applications, or other video data generated by an application, may be less suited to the resource-conserving encoding methods described herein. For example, for a multimedia application such as PowerPoint, complex transitions between slides so that they "fade-in" or "fade-out" may not be compatible with a resource-conserving encoding method. One solution is just to use normal encoding for incompatible video data. Another option is for the application that generates the video data to adapt that data so it is compatible. The application might also ask the encoder to switch to normal encoding for a number of frames so that the encoder "skips" the resource-conserving mode for the incompatible frames.

As an example, a PowerPoint application may know that the encoder is implementing a resource-conserving encoding mode. The application may also recognise that an animation included as part of a particular slide will likely cause the encoder to "trip" and partly fill the frames representing that slide with cheap data. The application may ask the encoder (or the application that controls the encoder: examples of screen sharing applications include Skype and Lync) to apply a normal encoding mode to frames representing that slide. The application could remove the animation from the slide altogether. Another option is for the application to adapt the frames that it passes to the encoder so that they are not necessarily the same as those seen on a screen at the transmitting device. For example, the application could include the animation only in later frames relating to a particular slide. That way, by the time the animation is included in the frames passed to the encoder, the majority of those frames will already be the same as the image shown by the receiving device. Similarly the application might remove any complicated effects associated with a transition between one slide and another. Therefore, while at the transmitting device the slides may be seen to "fade-in" or "fade-out", those effects may not be represented by the frames that the application passes to the encoder.

The application that generates the video data may communicate with the encoder, or an application that controls the encoder, to determine how best to form the frames that it passes to the encoder. The application may be implemented by a generation module responsible for generating the video data for passing to the encoder. The application (and the associated generation module) may be configured to adapt the video data it passes to the encoder in dependence on the encoding mode being implemented by the encoder. In particular, the application may adapt its video data accordingly if the encoder is implementing one of the resource-conserving encoding methods described herein.

An apparatus for encoding video data representing one or more images may comprise an interface module configured to interact between an application that generates video data and an encoder that encodes that video data for transmission. The apparatus may comprise the encoder. The interface module may be configured to adapt an encoding mode used by the encoder to encode the video data generated by the application in dependence on a quality associated with that video data.

The apparatus may also comprise a compliance module configured to compare a resource requirement associated with encoding video data using a standard encoding mode with an acceptable resource level and cause the encoder to switch to a less resource-intensive encoding mode than the standard encoding mode if the resource requirement is determined to exceed the acceptable resource level. The interface module may be configured to determine a quality of the video data being generated by the application and, in dependence on that quality, switch the compliance module from one operational state to another. This may involve switching the compliance module on or off. The interface module may change the operational state of the compliance module in dependence on a desired resolution associated with the video data. The interface module may switch the compliance module on if the desired resolution associated with the video data is relatively high and off if the desired resolution is relatively low. The interface module may change the operational state of the compliance module in dependence on a movement associated with a target represented by the video data. The interface module may switch the compliance module off if the movement associated with the target represented by the video data is relatively high and on if the associated movement is relatively low. An effect of switching the interface module on may be to generate a progressively updating image on a screen output of a receiving device.

The application that generates video data may be configured to adapt the video data that it passes to the encoder for encoding in dependence on an encoding mode being used by the encoder. A consequence of this may be that the video data that the application passes to the encoder is different from the video data it outputs to a screen.

Each of the generation and interface modules may be implemented as a portion of code stored on the receiving terminal's storage medium 24 and arranged for execution on its processing apparatus 26, though the possibility of some or all of these being wholly or partially implemented in dedicated hardware circuitry is not excluded.

Many video encoding standards provide for a frame that provides a stand-alone representation of an image. In other words, the receiver does not need to refer to any previously received frame to decode it. In the H264 standard this periodic frame is termed the Instantaneous Decoder Refresh (IDR). Typically an IDR frame is sent periodically to simplify recovery from errors in decoder. Unfortunately IDRs are likely to trigger panic mode. Therefore, periodically sending an IDR can cause corresponding periodic flicker. Some receivers have great difficulty recovering from errors without the IDR but other receivers can manage without them. It may be advantageous from a resource-conservation perspective for the encoder not to have to generate IDRs, which will typically generate long encoded frames. The transmitter may therefore negotiate with the receiver to skip IDRs. This negotiation typically happens when initiating the call. For example the sender and receiver can agree to skip IDRs until the receiver explicitly requests one, i.e. receiver feedback triggers the IDR.

The encoder may be configured to combine live video transfer with error recovery. Error recovery may involve the receiving device transmitting an indication of the last successfully received frame to the transmitting device. This indication could, for example, take the form of a signature. In one example, the signature may take the form of a hash signature (e.g. an MD5 digest) computed on the received frames. The transmitting device may check the hash signature to confirm that the receiving device has received the correct data. The hash signature may be computed for a frame containing less resource- intensive data or cheap content. That frame (which can be considered a partial fully-fledged frame) may therefore serve as a fallback since the receiving device may retransmit it if the hash signature is wrong, which indicates that the partial fully-fledged frame was not received successfully.

The embodiments described above may enable an encoder to manage its resources effectively, particularly when encoding resource-intensive video signals such as those generated in screen sharing applications. They also mitigate any effect on the users experience by providing mechanisms by which the screen image at the end user terminal is progressively updated. They may also have the more general advantage of limiting frame length. This is good not only from the perspective of the size limitations of send and receive buffers but also from the perspective of dealing with packet loss. A single burst of packet loss can cause an entire frame to be lost. The probability of loss increases with frame length, as does recovery time. One lost frame also leads to loss of all ensuing frames that depend on the lost frame. Modern video standards offer a simple fallback when a frame is lost: the receiver refers to the latest successfully transmitted frame. It is therefore likely to be more straightforward for the receiver to recover from a lost frame if frames are shorter in general.

The decoder does not necessarily have to be implemented at an end user terminal, nor output the video for immediate consumption at the receiving terminal. In alternative implementations, the receiving terminal may be a server running the decoder software, for outputting video to another terminal in decoded and/or concealed form, or storing the decoded video for later consumption. Similarly the encoder does not have to be implemented at an end-user terminal, nor encode video originating from the transmitting terminal.

The techniques disclosed herein can be implemented as an intrinsic part of an encoder or decoder, e.g. incorporated as an update to an existing standard such as H.264 or HEVC, or can be implemented on top of an existing standard such as an add-on to H.264 or HEVC. Further, the scope of the disclosure is not restricted specifically to any particular representation of video samples whether in terms of RGB, YUV or otherwise. Nor is the scope limited to any particular quantization, nor to a DCT transform. E.g. an alternative transform such as a Karhunen-LoeveTransform (KLT) could be used, or no transform may be used. Further, the disclosure is not limited to VoIP communications or communications over any particular kind of network, but could be used in any network capable of communicating digital data, or in a system for storing encoded data on a storage medium.

Generally, any of the functions described herein can be implemented using software, firmware, hardware (e.g., fixed logic circuitry), or a combination of these implementations. The terms "module", "functionality", "component" and "logic" as used herein generally represent software, firmware, hardware, or a combination thereof. In the case of a software implementation, the module, functionality, or logic represents program code that performs specified tasks when executed on a processor (e.g. CPU or CPUs). The program code can be stored in one or more computer readable memory devices. The features of the techniques described below are platform-independent, meaning that the techniques may be implemented on a variety of commercial computing platforms having a variety of processors.

For example, the user terminals may also include an entity (e.g. software) that causes hardware of the user terminals to perform operations, e.g., processors functional blocks, and so on. For example, the user terminals may include a computer-readable medium that may be configured to maintain instructions that cause the user terminals, and more particularly the operating system and associated hardware of the user terminals to perform operations. Thus, the instructions function to configure the operating system and associated hardware to perform the operations and in this way result in transformation of the operating system and associated hardware to perform functions. The instructions may be provided by the computer-readable medium to the user terminals through a variety of different configurations.

One such configuration of a computer-readable medium is signal bearing medium and thus is configured to transmit the instructions (e.g. as a carrier wave) to the computing device, such as via a network. The computer-readable medium may also be configured as a computer-readable storage medium and thus is not a signal bearing medium. Examples of a computer-readable storage medium include a random-access memory (RAM), read-only memory (ROM), an optical disc, flash memory, hard disk memory, and other memory devices that may us magnetic, optical, and other techniques to store instructions and other data.

## Claims

1. An apparatus for encoding video data, the apparatus comprising:
a compliance module configured to compare a resource requirement associated with encoding the video data to form at least part of an encoded frame using a standard encoding mode with a resource limit; and
an encoder configured to, responsive to a determination that the resource requirement will exceed the resource limit, form the at least part of an encoded frame by encoding some of the video data using the standard encoding mode and filling a remainder of the at least part of the encoded frame with data that is less resource intensive to generate than data generated using the standard encoding mode,
**characterized in that** the encoder is further configured to, when encoding a subsequent frame, commence encoding from a point in the subsequent frame that corresponds to a point at which the encoder ceased using the standard encoding mode when forming the at least part of an encoded frame.

2. An apparatus as claimed in claim 1, wherein the compliance module is configured to:
compare the resource requirement with the resource limit while the encoder is encoding the video data using the standard encoding mode; and
if it determines that the resource requirement exceeds the resource limit, invoke a mode that causes the encoder to cease encoding the video data using the standard encoding mode.

3. An apparatus as claimed in claim 1 or 2, wherein the video data represents an image, the encoder being configured to form the at least part of an encoded frame so that at least some of the image represented by the video data is not encoded in it.

4. An apparatus as claimed in any preceding claim, wherein the encoder is configured to fill the filling the remainder of the at least part of an encoded frame with data that is generated independently of the video data.

5. An apparatus as claimed in any preceding claim, wherein the encoder is configured to fill the remainder of the at least part of an encoded frame with data representing a repetition of an earlier frame.

6. An apparatus as claimed in any preceding claim, wherein the encoder is configured to fill the remainder of the at least part of an encoded frame with data representing a repetition of an earlier part of the encoded frame.

7. An apparatus as claimed in any preceding claim, wherein the encoder is configured to, when forming a subsequent encoded frame, fill the start of the subsequent frame with data that is less resource intensive to generate than data generated using the standard encoding mode until the encoder reaches a point in the frame that corresponds to a point at which the encoder ceased using the standard encoding mode when forming the at least part of an encoded frame.

8. A computer program product for encoding video data, comprising code embodied on a computer-readable storage medium and configured so as when executed by a computer to perform operations of:
comparing a resource requirement associated with encoding video data to form at least part of an encoded frame using a standard encoding mode with a resource limit; and
responsive to a determination that the resource requirement will exceed the resource limit, forming the at least part of an encoded frame by encoding some of the video data using the standard encoding mode; filling a remainder of the at least part of the encoded frame with data that is less resource intensive to generate than data generated using the standard encoding mode;
**characterized in that**, when encoding a subsequent frame, it is further configured to commence encoding from a point in the subsequent frame that corresponds to a point at which the encoder ceased using the standard encoding mode when forming the at least part of an encoded frame.

## Patentansprüche

1. Vorrichtung zum Codieren von Videodaten, wobei die Vorrichtung Folgendes umfasst:
ein Einhaltungsmodul, das dazu konfiguriert ist, einen Ressourcenbedarf, der mit dem Codieren der Videodaten assoziiert ist, um mindestens einen Teil eines codierten Frames unter Verwendung eines Standardcodiermodus zu bilden, mit einem Ressourcenlimit zu vergleichen; und
einen Codierer, der dazu konfiguriert ist, als Reaktion auf eine Bestimmung, dass der Ressourcenbedarf das Ressourcenlimit übersteigen wird, den mindestens einen Teil eines codierten Frames durch Codieren von einigen der Videodaten unter Verwendung des Standardcodiermodus und Füllen eines Rests des mindestens einen Teils des codierten Frames mit Daten, deren Erzeugung weniger ressourcenintensiv ist als unter Verwendung des Standardcodiermodus erzeugten Daten, zu bilden,
**dadurch gekennzeichnet, dass** der Codierer weiterhin dazu konfiguriert ist, beim Codieren eines anschließenden Frames das Codieren von einem Punkt in dem anschließenden Frame zu beginnen, der einem Punkt entspricht, an dem der Codierer unter Verwendung des Standardcodiermodus beim Bilden des mindestens einen Teils eines codierten Frames aufgehört hat.

2. Vorrichtung nach Anspruch 1, wobei das Einhaltungsmodul zu Folgendem konfiguriert ist:
Vergleichen des Ressourcenbedarfs mit dem Ressourcenlimit, während der Codierer die Videodaten unter Verwendung des Standardcodiermodus codiert; und
wenn er bestimmt, dass der Ressourcenbedarf das Ressourcenlimit übersteigt, einen Modus aufzurufen, der bewirkt, dass der Codierer das Codieren der Videodaten unter Verwendung des Standardcodiermodus beendet.

3. Vorrichtung nach Anspruch 1 oder 2, wobei die Videodaten ein Bild darstellen, wobei der Codierer dazu konfiguriert ist, den mindestens einen Teil eines codierten Frames zu bilden, so dass mindestens etwas des Bilds, das durch die Videodaten dargestellt wird, nicht darin codiert ist.

4. Vorrichtung nach einem vorhergehenden Anspruch, wobei der Codierer dazu konfiguriert ist, den Rest des mindestens einen Teils eines codierten Frames mit Daten zu füllen, die unabhängig von den Videodaten erzeugt werden.

5. Vorrichtung nach einem vorhergehenden Anspruch, wobei der Codierer dazu konfiguriert ist, den Rest des mindestens einen Teils eines codierten Frames mit Daten zu füllen, die eine Wiederholung eines früheren Frames darstellen.

6. Vorrichtung nach einem vorhergehenden Anspruch, wobei der Codierer dazu konfiguriert ist, den Rest des mindestens einen Teils eines codierten Frames mit Daten zu füllen, die eine Wiederholung eines früheren Teils des codierten Frames darstellen.

7. Vorrichtung nach einem vorhergehenden Anspruch, wobei der Codierer dazu konfiguriert ist, beim Bilden eines anschließenden codierten Frames den Start des anschließenden Frames mit Daten zu füllen, deren Erzeugung weniger ressourcenintensiv ist als unter Verwendung des Standardcodiermodus erzeugten Daten, bis der Codierer einen Punkt in dem Frame erreicht, der einem Punkt entspricht, an dem der Codierer unter Verwendung des Standardcodiermodus beim Bilden des mindestens einen Teils eines codierten Frames aufgehört hat.

8. Computerprogrammprodukt zum Codieren von Videodaten, das Code umfasst, der auf einem computerlesbaren Speichermedium verkörpert ist und dazu konfiguriert ist, bei Ausführung durch einen Computer die folgenden Arbeitsvorgänge durchzuführen:
Vergleichen eines Ressourcenbedarfs, der mit dem Codieren von Videodaten assoziiert ist, um mindestens einen Teil eines codierten Frames unter Verwendung eines Standardcodiermodus zu bilden, mit einem Ressourcenlimit und
als Reaktion auf eine Bestimmung, dass der Ressourcenbedarf das Ressourcenlimit übersteigen wird, Bilden des mindestens einen Teils eines codierten Frames durch Codieren von einigen der Videodaten unter Verwendung des Standardcodiermodus; Füllen eines Rests des mindestens einen Teils des codierten Frames mit Daten, deren Erzeugung weniger ressourcenintensiv ist als unter Verwendung des Standardcodiermodus erzeugten Daten;
**dadurch gekennzeichnet, dass** er weiterhin dazu konfiguriert ist, beim Codieren eines anschließenden Frames das Codieren von einem Punkt in dem anschließenden Frame zu beginnen, der einem Punkt entspricht, an dem der Codierer unter Verwendung des Standardcodiermodus beim Bilden des mindestens einen Teils eines codierten Frames aufgehört hat.

## Revendications

1. Appareil servant à coder des données vidéo, l'appareil comportant :
un module de conformité configuré pour comparer les besoins en ressources associés au codage des données vidéo pour former au moins une partie d'une trame codée en utilisant un mode de codage standard par rapport à une limite des ressources ; et
un codeur configuré pour, en réponse à une détermination comme quoi les besoins en ressources dépasseront la limite des ressources, former ladite au moins une partie d'une trame codée par le codage d'une partie des données vidéo en utilisant le mode de codage standard et pour remplir un reste de ladite au moins une partie de la trame codée avec des données qui sont moins intenses à générer en termes de ressources par rapport à des données générées en utilisant le mode de codage standard,
**caractérisé en ce que** le codeur est par ailleurs configuré pour, quand il code une trame suivante, commencer le codage à partir d'un point dans la trame suivante qui correspond à un point au niveau duquel le codeur a cessé d'utiliser le mode de codage standard lors de la formation de ladite au moins une partie d'une trame codée.

2. Appareil selon la revendication 1, dans lequel le module de conformité est configuré pour :
comparer les besoins en ressources par rapport à la limite des ressources pendant que le codeur code les données vidéo en utilisant le mode de codage standard ; et
s'il est déterminé que les besoins en ressources dépassent la limite des ressources, invoquer un mode qui amène le codeur à cesser le codage des données vidéo qui utilise le mode de codage standard.

3. Appareil selon la revendication 1 ou la revendication 2, dans lequel les données vidéo représentent une image, le codeur étant configuré pour former ladite au moins une partie d'une trame codée de telle sorte qu'au moins une partie de l'image représentée par les données vidéo n'est pas codée dans celle-ci.

4. Appareil selon l'une quelconque des revendications précédentes, dans lequel le codeur est configuré pour remplir le remplissage du reste de ladite au moins une partie d'une trame codée avec des données qui sont générées indépendamment des données vidéo.

5. Appareil selon l'une quelconque des revendications précédentes, dans lequel le codeur est configuré pour remplir le reste de ladite au moins une partie d'une trame codée avec des données représentant une répétition d'une trame précédente.

6. Appareil selon l'une quelconque des revendications précédentes, dans lequel le codeur est configuré pour remplir le reste de ladite au moins une partie d'une trame codée avec des données représentant une répétition d'une partie précédente de la trame codée.

7. Appareil selon l'une quelconque des revendications précédentes, dans lequel le codeur est configuré pour, quand il forme une trame codée suivante, remplir le début de la trame suivante avec des données qui sont moins intenses à générer en termes de ressources par rapport à des données générées en utilisant le mode de codage standard jusqu'à ce que le codeur atteigne un point dans la trame qui correspond à un point au niveau duquel le codeur a cessé d'utiliser le mode de codage standard lors de la formation de ladite au moins une partie d'une trame codée.

8. Produit programme informatique servant à coder des données vidéo, comportant un code mis en oeuvre sur un support de stockage lisible par ordinateur et configuré de manière à, quand il est exécuté par un ordinateur, effectuer les opérations consistant à :
comparer les besoins en ressources associés au codage de données vidéo pour former au moins une partie d'une trame codée en utilisant un mode de codage standard par rapport à une limite des ressources ;
en réponse à une détermination comme quoi les besoins en ressources dépasseront la limite des ressources, former ladite au moins une partie d'une trame codée par le codage d'une partie des données vidéo en utilisant le mode de codage standard ; remplir un reste de ladite au moins une partie de la trame codée avec des données qui sont moins intenses à générer en termes de ressources par rapport à des données générées en utilisant le mode de codage standard ;
**caractérisé en ce que**, quand il code une trame suivante, il est par ailleurs configuré pour commencer le codage à partir d'un point dans la trame suivante qui correspond à un point au niveau duquel le codeur a cessé d'utiliser le mode de codage standard lors de la formation de ladite au moins une partie d'une trame codée.
